# EUROPEAN PATENT APPLICATION

(11) **EP 2 700 832 A1**
(43) Date of publication of application: **26.02.2014**
(21) Application number: 12773771.6
(22) Date of filing: 22.03.2012
(51) Int. Cl.: F16C 17/10, F16C 33/74

(54) **FLUID DYNAMIC PRESSURE BEARING DEVICE**

(30) Priority: 18.04.2011 JP 2011092037
(71) Applicant: NTN Corporation, Osaka-shi, Osaka 550-0003 (JP)
(72) Inventor: KURIMURA Tetsuya, Kuwana-shi Mie 511-0811 (JP); SHIOZAWA Kazuyuki, Kuwana-shi Mie 511-0811 (JP); YAMAMOTO Yasuhiro, Kuwana-shi Mie 511-0811 (JP)
(74) Representative: Eder, Christian
(86) International application number: PCT/JP2012/057358
(87) International publication number: WO 2012/144288

(57) **Abstract**

A shaft side sealing surface (2a2) provided to an outer peripheral surface of a shaft member (2a) and a bearing side sealing surface (9a) provided to an inner peripheral surface of a bearing member (11) (sealing portion (9)) each has a tapered surface that radially shrinks toward an open-to-air side. In addition, the bearing side sealing surface (9a) has a minimum diameter (r₄) set to be larger than a maximum diameter (r₅) of the shaft side sealing surface (2a2).

## Description

### Technical Field

The present invention relates to a fluid dynamic bearing device for supporting a shaft member in a relatively and freely rotatable manner through use of pressures of oil films formed in radial bearing gaps between an outer peripheral surface of the shaft member and an inner peripheral surface of a bearing member.

### Background Art

Afluiddynamicbearingdeviceisexcellentinrotational accuracy and quietness, and hence is suitably used in a spindle motor for a hard disk drive (HDD) and in various fan motors.

As the fluid dynamic bearing device of this type, there is given a fluid dynamic bearing device of what is called a fully oil-impregnated type in which an inside of a bearing member is filled with a lubricating oil. In this case, a sealing structure for preventing oil leakage needs to be provided at an opening portion of the bearing member. As such a sealing structure, there has been known a structure in which a sealing space having a wedge shape in cross-section and increased in radial dimension toward an open-to-air side is formed between an outer peripheral surface of a shaft member and an inner peripheral surface of the bearing member that face each other in a radial direction.

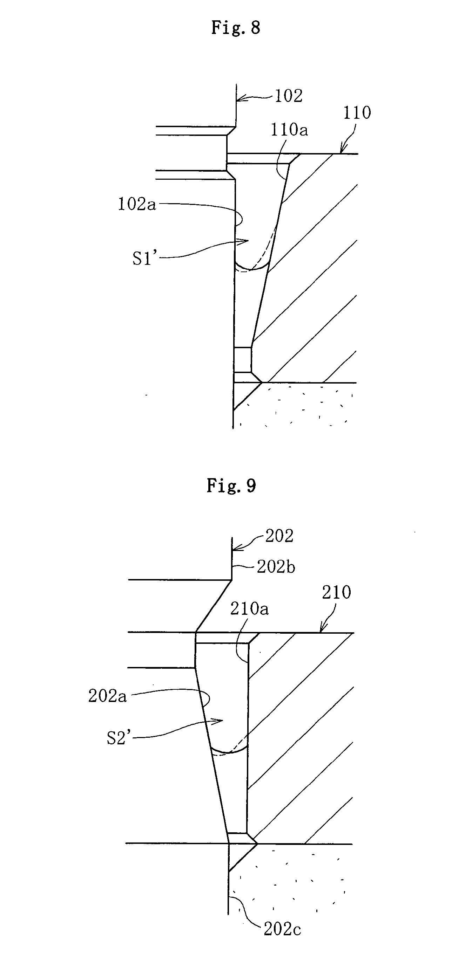

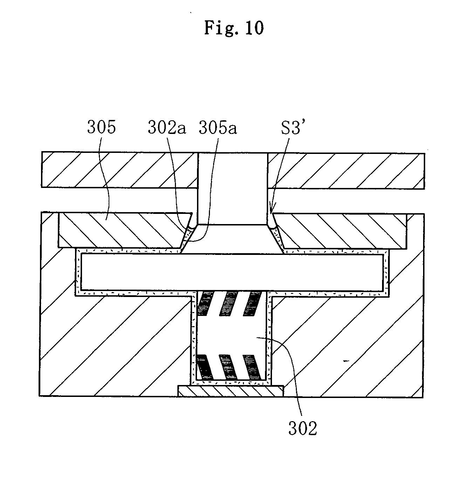

For example, Patent Literature 1 discloses a structure in which, as illustrated in FIG. 8, an inner peripheral surface 110a of a sealing member 110 is formed of a tapered surface that radially expands toward an open-to-air side (upper side in FIG. 8), and a sealing space S1' having a wedge shape in cross-section is formed between the tapered inner peripheral surface 110a and a cylindrical-surface-like outer peripheral surface 102a of a shaft member 102. Meanwhile, Patent Literature 2 discloses a structure in which, as illustrated in FIG. 9, an outer peripheral surface of a shaft member 202 is formed of a tapered surface 202a that radially shrinks toward the open-to-air side (upper side in FIG. 9), and a sealing space S2' having a wedge shape in cross-section is formed between the tapered surface 202a and a cylindrical-surface-like inner peripheral surface 210a of a sealing member 210. Further, Patent Literature 3 discloses a structure in which, as illustrated in FIG. 10, an outer peripheral surface 302a of a shaft member 302 and an inner peripheral surface 305a of a sealing member (annular lid member) 305 are each formed of a tapered surface that radially shrinks toward the open-to-air side (upper side in FIG. 10), and a sealing space S3' having a wedge shape in cross-section is formed therebetween.

### Citation List

Patent Literature 1: JP 2005-337364 A
Patent Literature 2: JP 2003-83323 A
Patent Literature 3: JP 2002-168250 A

### Summary of Invention

### Technical Problems

When the shaft member is rotated at high speed, a centrifugal force is generated to force oil retained in the sealing space onto the inner peripheral surface of the bearing member (sealing member). At this time, as illustrated in FIG. 8, when the inner peripheral surface 110a of the sealing member 110 is formed of the tapered surface that radially expands toward the open-to-air side, a centrifugal force is generated to force the oil retained in the sealing space S1' into the radially expanded side (upper side in FIG. 8) of the tapered surface. Thus, the oil may be moved to the open-to-air side, and oil leakage may occur (refer to the dotted line in FIG. 8).

Meanwhile, as illustrated in FIG. 9, when the inner peripheral surface 210a of the sealing member 210 is formed of the cylindrical surface, a force of forcing the oil to the open-to-air side at the time of application of the centrifugal force to the oil in the sealing space S2' is reduced (refer to the dotted line in FIG. 9). However, when the shaft member 202 is rotated at an ultra-high speed (for example, 10, 000 r/min or more), a significantly greater centrifugal force is applied to the oil retained in the sealing space s2'. As a result, oil leakage may occur even when the inner peripheral surface of the sealing member 210 is formed into a cylindrical surface shape. Further, in FIG. 9, the outer peripheral surface of the shaft member 202 comprises a cylindrical surface 202b provided on the open-to-air side with respect to the tapered surface 202a and having a diameter set to be substantially equal to a maximum diameter of the tapered surface 202a (in other words, outer diameter of a radial bearing surface 202c), and hence the cylindrical surface 202b overlies a part of the sealing space S2'. Thus, at the time of oil supply, oil level inside the sealing space S2' is difficult to confirm from an outside (above), and hence the oil is difficult to supply by an appropriate amount. As a result, insufficient lubrication due to a lack of oil and oil leakage due to an excess of oil may occur.

Further, as illustrated in FIG. 10, when the inner peripheral surface 305a of the sealing member 305 is formed of the tapered surface that radially shrinks toward the open-to-air side (upper side in FIG. 10), at the time of application of a centrifugal force to the oil in the sealing space S3', the oil is forced into the inside of the bearing member (lower side in FIG. 10) along the tapered inner peripheral surface 305a of the sealing member 305. Thus, oil leakage can be more positively prevented. However, in this case, the tapered inner peripheral surface 305a of the sealing member 305 extends to a radially inner side, and hence the sealing member 305 overlies most of the sealing space S3'. As a result, an oil level in the sealing space S3' is significantly difficult to confirm at the time of oil supply.

As described above, in the sealing structure of the fluid dynamic bearing device, it has been difficult to positively prevent oil leakage and simultaneously to secure easiness of confirming the oil level in the sealing space at the time of oil supply. Such problems occur not only in a shaft-rotation-type fluid dynamic bearing device in which the shaft member is rotated but also in a shaft-fixed-type fluid dynamic bearing device in which the shaft member is fixed and the bearing member is rotated.

It is an object of the present invention to provide a fluid dynamic bearing device which is free from a risk of oil leakage even during high speed rotation of a shaft member and facilitates confirmation of an oil level at the time of oil supply.

### Solution to Problems

In order to achieve the above-mentioned object, according to the present invention, there is provided a fluid dynamic bearing device, comprising: a shaft member; a bearing member having an inner periphery into which the shaft member is inserted; a lubricating oil filled in an inside of the bearing member; a radial bearing portion for generating a dynamic pressure action in an oil film formed in a radial bearing gap between an outer peripheral surface of the shaft member and an inner peripheral surface of the bearing member so as to support the shaft member relatively in a radial direction; and a sealing space that is formed between a shaft side sealing surface provided to the outer peripheral surface of the shaft member and a bearing side sealing surface provided to the inner peripheral surface of the bearing member, the sealing space having an oil surface formed therein, in which the shaft side sealing surface and the bearing side sealing surface each comprise a tapered surface that radially shrinks toward an open-to-air side, and in which the bearing side sealing surface has a minimum diameter set to be larger than a maximum diameter of the shaft side sealing surface.

According to the fluid dynamic bearing device, it is possible not only to positively prevent oil leakage but also to secure easiness of confirming an oil level at the time of oil supply. Specifically, the shaft side sealing surface comprises the tapered surface that radially shrinks toward the open-to-air side. Thus, when a centrifugal force is applied to the oil in the sealing space through rotation of the shaft member, the oil is forced into the inside of the bearing member along the tapered bearing side sealing surface. In this way, oil leakage can be prevented. Further, the bearing side sealing surface has the minimum diameter set to be larger than the maximum diameter of the shaft side sealing surface. With this, the open-to-air side of the sealing space can be widely opened, and hence an oil level in the sealing space can be easily confirmed at the time of oil supply.

When the shaft side sealing surface is inclined with respect to an axial direction at an inclination angle set to be higher than an inclination angle of the bearing side sealing surface with respect to the axial direction, the sealing space to be formed therebetween is formed into a wedge shape in cross-section that is reduced in radial dimension toward an inside of the bearing. With this, a capillary force is generated, and hence oil leakage can be positively prevented.

When radially outer dimensions of all regions on the open-to-air side with respect to the shaft side sealing surface of the outer peripheral surface of the shaft member are each set to be equal to or smaller than a minimum diameter of the shaft side sealing surface, the shaft member does not overlie the open-to-air side of the sealing space. Thus, the oil level in the sealing space can be more easily confirmed.

When the bearing member has an oil repellent agent applied to an end surface which is provided on the open-to-air side with respect to the bearing side sealing surface, oil leakage can be more positively prevented. Similarly, when the outer peripheral surface of the shaft member has the oil repellent agent applied to a region which is adjacent on the open-to-air side with respect to the shaft side sealing surface, the oil leakage can be more positively prevented.

In the fluid dynamic bearing device described above, for example, the bearing member may be opened at both ends in the axial direction, and the sealing space may comprise sealing spaces provided respectively in opening portions at both the ends in the axial direction.

### Advantageous Effects of Invention

As described above, according to the fluid dynamic bearing device of the present invention, the risk of oil leakage is eliminated even during the high speed rotation of the shaft member, and the oil level in the sealing space can easily be confirmed at the time of oil supply.

### Brief Description of Drawings

FIG. 1 is a sectional view of an axial-flow fan motor incorporating a fluid dynamic bearing device according to an embodiment of the present invention.
FIG. 2 is a sectional view of the fluid dynamic bearing device.
FIG. 3 is an enlarged sectional view of a vicinity of a sealing space in the fluid dynamic bearing device.
FIG. 4 is a sectional view of a bearing sleeve of the fluid dynamic bearing device.
FIG. 5 is a bottom view of the bearing sleeve.
FIG. 6 is a top view of a thrust bush of the fluid dynamic bearing device.
FIG. 7 is a sectional view of a fluid dynamic bearing device according to another embodiment of the present invention.
FIG. 8 is a sectional view of a sealing structure of a conventional fluid dynamic bearing device.
FIG. 9 is a sectional view of a sealing structure of another conventional fluid dynamic bearing device.
FIG. 10 is a sectional view of still another conventional fluid dynamic bearing device.

### Description of Embodiments

Now, description is made of embodiments of the present invention with reference to the drawings.

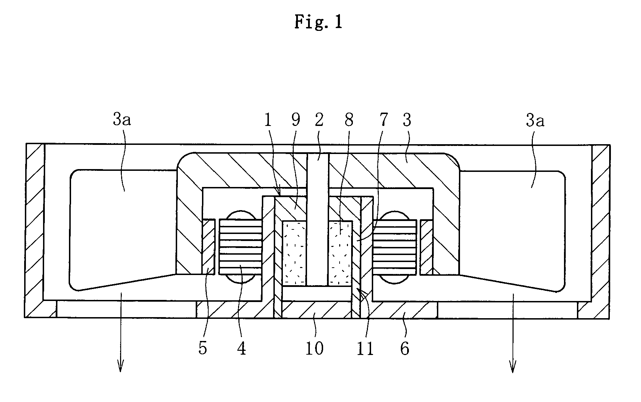

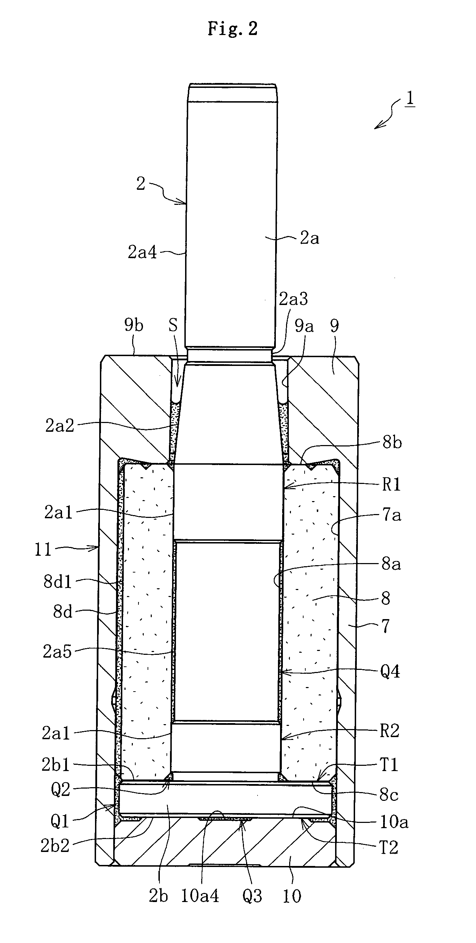

FIG.1 illustrates an axial-flow fan motor incorporating a fluid dynamic bearing device 1 according to an embodiment of the present invention. The fan motor comprises the fluid dynamic bearing device 1 for supporting a shaft member 2 in a freely rotatable manner, a casing 6 mounted to a stationary side (bearing member 11) of the fluid dynamic bearing device 1, a rotor 3 mounted to a rotary side (shaft member 2) of the fluid dynamic bearing device 1, and stator coils 4 and magnets 5 opposed to each other across a radial gap. The stator coils 4 are mounted to the casing 6, and the magnets 5 are mounted to the rotor 3. The rotor 3 is provided integrally with a plurality of fans 3a. When the stator coils 4 are energized, the magnets 5 and the rotor 3 are rotated by an electromagnetic force generated between the stator coils 4 and the magnets 5. As a result, the fans 3a generate airflow in an axial direction. In the case described in this embodiment, the airflow is generated to a lower side in FIG. 1 (refer to arrows). The rotor 3 of this fan motor is rotated at a high speed of 10, 000 r/min or more, sometimes as high as 30,000 r/min or more, or maximally 40,000 r/min, and the fan motor is used, for example, as that of a turbofan to be incorporated in medical devices and the like. Note that, for the sake of simplicity of description, a projecting side of the shaft member in the axial direction with respect to the bearing member 11 (upper side in FIG. 2) is hereinafter referred to as upper side, and the opposite side (lower side in FIG. 2) is hereinafter referred to as lower side. This definition is not intended to limit use of the fan motor, and for example, the fan motor illustrated in FIG. 1 may be used upside down (specifically, so as to generate upward airflow).

As illustrated in FIG. 2, the fluid dynamic bearing device 1 comprises the shaft member 2 and the bearing member 11. In this embodiment, the bearing member 11 comprises a bearing sleeve 8 having an inner periphery into which the shaft member 2 is inserted, a cylindrical housing 7 having an inner peripheral surface to which the bearing sleeve 8 is fixed, a thrust bush 10 that closes a lower end opening portion of the housing 7, and a sealing portion 9 provided around an upper end opening portion of the housing 7. In the example of the figure, the sealing portion 9 and the housing 7 are formed integrally with each other. The fluid dynamic bearing device 1 is a fluid dynamic bearing device of what is called a fully oil-impregnated type in which an inside of the bearing member 11 is filled with a lubricating oil.

The shaft member 2 comprises a shaft portion 2a, and a flange portion 2b provided at a lower end of the shaft portion 2a. The shaft portion 2a and the flange portion 2b are formed integrally with each other through, for example, a trimming process on an ingot material such as stainless steel. The shaft portion 2a has an outer peripheral surface provided with a cylindrical-surface-like radial bearing surface 2a1. In the example of the figure, two radial bearing surfaces 2a1 are provided at two positions spaced apart from each other in the axial direction. Above the upper radial bearing surface 2a1, a tapered surface that radially shrinks upward is provided as a shaft side sealing surface 2a2. Above the shaft side sealing surface 2a2, an annular recessed portion 2a3 is provided, and an oil repellent agent is applied to the annular recessed portion 2a3. Above the annular recessed portion 2a3, there is provided a cylindrical surface 2a4 to which the rotor 3 is fixed. At a position between the upper and lower radial bearing surfaces 2a1 in the axial direction, there is provided a relief portion 2a5 smaller in diameter than the radial bearing surface 2a1. The radial bearing surfaces 2a1 and the relief portion 2a5 of the shaft portion 2a face an inner peripheral surface 8a of the bearing sleeve 8 in a radial direction, and the shaft side sealing surface 2a2 faces an inner peripheral surface (bearing side sealing surface 9a) of the sealing portion 9 in the radial direction.

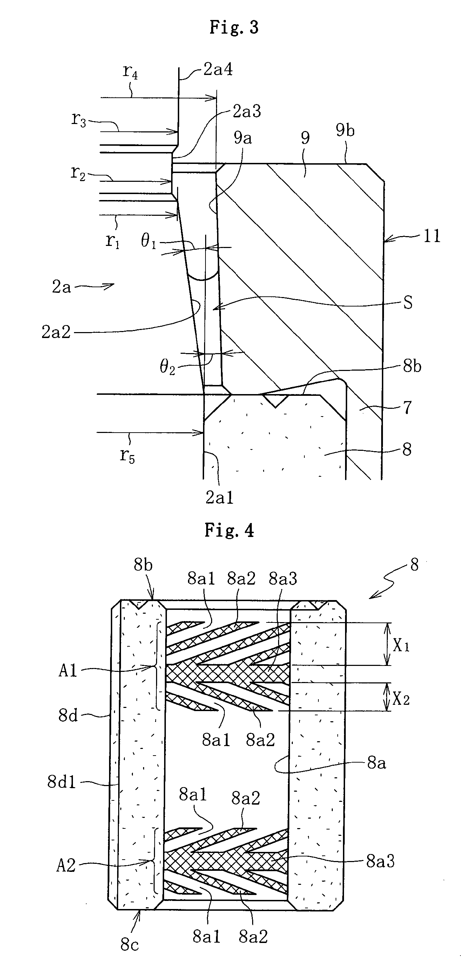

Radially outer dimensions of all regions above the shaft side sealing surface 2a2 of the outer peripheral surface of the shaft portion 2a of the shaft member 2 are set to be equal to or smaller than a minimum diameter of the shaft side sealing surface 2a2. Specifically, as illustrated in FIG. 3, the annular recessed portion 2a3 has a radially outer dimension r₂ set to be smaller than a minimum diameter r₁ of the shaft side sealing surface 2a2 (r₂<r₁) , and the cylindrical surface 2a4 has a radially outer dimension r₃ set to be equal to the minimum diameter r₁ of the shaft side sealing surface 2a2 (r₃=r₁).

The bearing sleeve 8 is obtainedby forming, for example, a sintered metal, more specifically, a sintered metal containing at least one of copper and iron as main components into a substantially cylindrical shape. The inner peripheral surface 8a of the bearing sleeve 8 is provided with a radial bearing surface. In this embodiment, as illustrated in FIG. 4, radial bearing surfaces A1 and A2 are provided at two positions spaced apart from each other in the axial direction on the inner peripheral surface 8a. The radial bearing surfaces A1 and A2 are each provided with a radial dynamic pressure generating portion for generating a dynamic pressure action in the lubricating oil in radial bearing gaps. In the example of the figure, the radial dynamic pressure generating portions each comprise dynamic pressure generating grooves 8a1 in a herringbone pattern, hill portions 8a2 provided between the dynamic pressure generating grooves 8a1 in a circumferential direction, and a cylindrical portion 8a3 provided at a substantially central portion in the axial direction of each of the radial bearing surfaces A1 and A2. The hill portions 8a2 and the cylindrical portion 8a3 are provided continuously with each other on the same cylindrical plane (indicated by cross-hatching in FIG. 4). In the example of the figure, the dynamic pressure generating grooves 8a1 and the hill portions 8a2 of the upper radial bearing surface A1 are formed into an axially asymmetrical shape. Specifically, an axial dimension X₁ of a region above the cylindrical portion 8a3 is set to be larger than an axial dimension X₂ of a region below the cylindrical portion 8a3 (X₁>X₂). The dynamic pressure generating grooves 8a1 and the hill portions 8a2 of the lower radial bearing surface A2 are formed into an axially symmetrical shape.

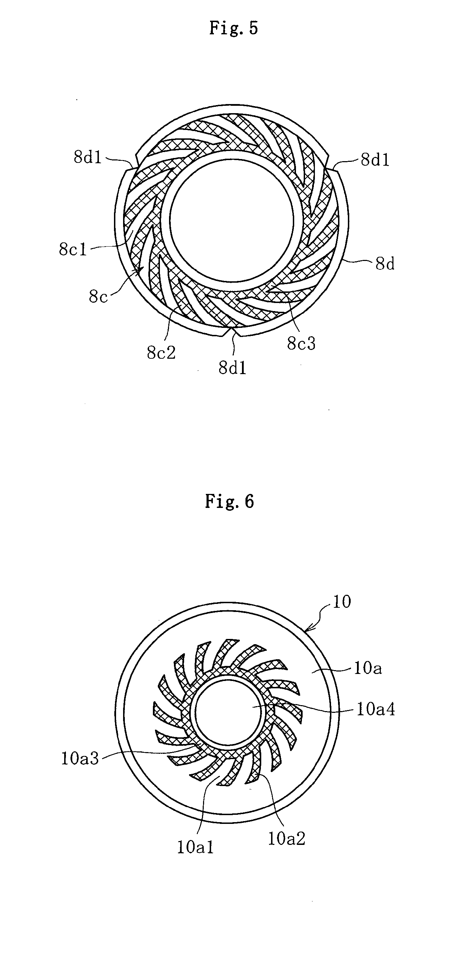

The bearing sleeve 8 has a lower end surface 8c provided with a thrust bearing surface, and the thrust bearing surface is provided with a thrust dynamic pressure generating portion for generating a dynamic pressure action in the lubricating oil filled in a thrust bearing gap. In this embodiment, as illustrated in FIG. 5, the thrust dynamic pressure generating portion comprises pump-in type dynamic pressure generating grooves 8c1 in a spiral pattern, hill portions 8c2 provided between the dynamic pressure generating grooves 8c1 in the circumferential direction, and a flat annular portion 8c3 that couples radially inner ends of the hill portions 8c2 to each other into an annular form. The hill portions 8c2 and the annular portion 8c3 are provided continuously with each other on the same flat plane (indicated by cross-hatching in FIG. 5).

The bearing sleeve 8 has an upper end surface 8b held in abutment against the sealing portion 9. The bearing sleeve 8 has an outer peripheral surface 8d provided with an axial groove 8d1 over the entire axial direction (refer to FIG. 4). The number of the axial grooves 8d1 is arbitrarily determined. For example, in this embodiment, three axial grooves 8d1 are equiangularly arranged (refer to FIG. 5).

As illustrated in FIG. 2, the housing 7 is formed into a substantially cylindrical shape through a machining process on metals or injection molding of resins. The housing 7 has an inner peripheral surface 7a to which the outer peripheral surface 8d of the bearing sleeve 8 is fixed by means of gap-filling bonding, press-fitting, press-fit bonding (press-fitting through intermediation of an adhesive), and the like.

The sealing portion 9 is provided integrally with the upper end portion of the housing 7. The inner peripheral surface of the sealing portion 9 functions as the bearing side sealing surface 9a. As illustrated in FIG. 3, the bearing side sealing surface 9a is formed of the tapered surface that radially shrinks upward. The bearing side sealing surface 9a has a minimum diameter r₄ (in other words, inner diameter of the upper end portion) set to be larger than a maximum diameter r₅ of the shaft side sealing surface 2a2 (in other words, outer diameter of the radial bearing surface 2a1) (r₄>r₅). The shaft side sealing surface 2a2 is inclined with respect to the axial direction at an inclination angle θ₁ set to be higher than an inclination angle θ₂ of the bearing side sealing surface 9a with respect to the axial direction (θ₁>θ₂) . Specifically, for example, the inclination angle θ₁ is set within a range of from 4° to 8°, and the inclination angle θ₂ is set within a range of from 0.5° to 2°. With this, in a region between the bearing side sealing surface 9a and the shaft side sealing surface 2a2 in the radial direction, a sealing space S is formed into a wedge shape in cross-section that is gradually reduced downward in radial dimension. The sealing portion 9 has an upper end surface 9b to which the oil repellent agent is applied. An oil level of the lubricating oil filled in the internal space of the bearing member 11, which is sealed by the sealing portion 9, is constantly maintained within a range of the sealing space S. In other words, the sealing space S has a volume enough to absorb a volumetric change of the lubricating oil.

The thrust bush 10 is formed into a substantially disc shape through press working on metals or injection molding of resins, and fixed to the lower end portion of the inner peripheral surface 7a of the housing 7 by means of gap-filling bonding, press-fitting, press-fit bonding, and the like (refer to FIG. 2). The thrust bush 10 has an upper end surface 10a provided with a thrust bearing surface, and the thrust bearing surface is provided with a thrust dynamic pressure generating portion for generating a dynamic pressure action in the lubricating oil filled in a thrust bearing gap. In this embodiment, as illustrated in FIG. 6, the thrust dynamic pressure generating portion comprises pump-in type dynamic pressure generating grooves 10a1 in a spiral pattern, hill portions 10a2 provided between the dynamic pressure generating grooves 10a1 in the circumferential direction, and a flat annular portion 10a3 that couples radially inner ends of the hill portions 10a2 to each other into an annular form. The hill portions 10a2 and the annular portion 10a3 are provided continuously with each other on the same flat plane (indicated by cross-hatching in FIG. 6). On a radially inner side with respect to the annular portion 10a3, a relief portion 10a4 is provided in a sunk manner.

After assembly of the components described above, the internal space of the bearing member 11, which comprises internal pores of the bearing sleeve 8, is filled with the lubricating oil. In this way, the fluid dynamic bearing device 1 illustrated in FIG. 2 is completed. At this time, as illustrated in FIG. 3, the minimum diameter r₄ of the bearing side sealing surface 9a is set to be larger than the maximum diameter r₅ of the shaft side sealing surface 2a2, and hence the sealing portion 9 does not substantially overlie the sealing space S formed therebetween. Further, the outer diameters of the regions above the shaft side sealing surface 2a2 (annular recessed portion 2a3 and cylindrical surface 2a4) of the outer peripheral surface of the shaft member 2 are set to be equal to or smaller than the minimum diameter of the shaft side sealing surface 2a2, and hence those regions do not overlie the sealing space S. In this way, the upper side of the sealing space S can be widely opened, and hence the oil level in the sealing space S can be easily confirmed (recognized) from above at the time of oil supply to the inside of the bearing member 11. In this way, oil supply can be performed while confirming the oil level, and hence an appropriate amount of oil can be supplied to the inside of the bearing member 11. As a result, insufficient lubrication due to a lack of oil and oil leakage due to an excess of oil can be prevented.

When the shaft member 2 is rotated, the radial bearing gaps are formed between the radial bearing surfaces A1 and A2 of the inner peripheral surface 8a of the bearing sleeve 8 and the radial bearing surfaces 2a1 of the shaft portion 2a. Then, pressures of oil films formed in the radial bearing gaps are increased respectively by the radial dynamic pressure generating portions (dynamic pressure generating grooves 8a1) formed respectively on the radial bearing surfaces A1 and A2. In this way, there are formed radial bearing portions R1 and R2 that support the shaft member 2 in a non-contact and freely rotatable manner in the radial direction by the pressures (dynamic pressure action) (refer to FIG. 2).

Simultaneously, the thrust bearing gaps are formed respectively between an upper end surface 2b1 of the flange portion 2b and the lower end surface 8c of the bearing sleeve 8, and between a lower end surface 2b2 of the flange portion 2b and the upper end surface 10a of the thrust bush 10. Pressures of oil films in the thrust bearing gaps are increased respectively by the thrust dynamic pressure generating portion (dynamic pressure generating grooves 8c1) of the lower end surface 8c of the bearing sleeve 8 and the thrust dynamic pressure generating portion (dynamic pressure generating grooves 10a1) of the upper end surface 10a of the thrust bush 10. In this way, there are formed a first thrust bearing portion T1 and a second thrust bearing portion T2 that support the shaft member 2 in a non-contact manner by the pressures (dynamic pressure action).

At this time, the oil filled in the inside of the bearing member 11 is drawn downward by a capillary force of the sealing space S having the wedge shape in cross-section. Further, the shaft side sealing surface 2a2 is formed of the tapered surface that radially shrinks upward, and hence the oil inside the sealing space S is forced downward along the shaft side sealing surface 2a2 by a centrifugal force. Further, the bearing side sealing surface 9a is formed of the tapered surface that radially shrinks upward, and hence the oil that has received the centrifugal force is forced downward by the bearing side sealing surface 9a. With this, even when a high centrifugal force is applied to the oil in the sealing space S through rotation of the shaft member 2 at an ultra-high speed of more than 10,000 r/min, leakage of the oil to an outside of the bearing member 11 can be positively prevented. Further, in this embodiment, the oil repellent agent is applied to each of the adjacent region above the shaft side sealing surface 2a2 (annular recessed portion 2a3) and the upper end surface 9b of the bearing side sealing surface 9a. Thus, even when the oil moves upward along the shaft side sealing surface 2a2 and the bearing side sealing surface 9a, the oil is repelled by the oil repellent agent, and the oil is forced downward by the sealing surfaces 2a2 and 9a. In this way, the leakage of the oil can be more positively prevented.

Further, as described above, when the lubricating oil inside the bearing member 11 is caused to flow by the radial dynamic pressure generating portions and the thrust dynamic pressure generating portions, a negative pressure may be locally generated inside the bearing member 11. In this embodiment, as illustrated in FIG. 2, the axial grooves 8d1 are formed in the outer peripheral surface 8d of the bearing sleeve 8 so as to communicate the sealing space S to a space Q1 on the radially outer side with respect to the flange portion 2b, to thereby constantly maintain a pressure in the space Q1 to be equal to the atmospheric pressure. Then, the pump-in type dynamic pressure generating grooves 8c1 and 10a1 formed respectively in the lower end surface 8c of the bearing sleeve 8 and the upper end surface 10a of the thrust bush 10 cause the lubricating oil to be forced into a radially inner side from the space Q1 on the radially outer side with respect to the flange portion 2b. With this, the negative pressure is prevented from being generated in a space Q2 facing an inner peripheral chamfer of the lower end surface 8c of the bearing sleeve 8, and a space Q3 facing the relief portion 10a4 of the thrust bush 10. Further, as illustrated in FIG. 4, the radial dynamic pressure generating portion (dynamic pressure generating grooves 8a1) of the upper radial bearing surface A1 formed on the inner peripheral surface 8a of the bearing sleeve 8 is formed into an axially asymmetrical shape. Thus, the lubricating oil filled in the radial bearing gap of the first radial bearing portion R1 is forced downward, and the negative pressure is prevented from being generated in a space Q4 facing the relief portion 2a5 of the shaft portion 2a.

The present invention is not limited to the embodiment described above. Now, description is made of another embodiment of the present invention. Parts having the same functions as those in the embodiment described above are denoted by the same reference symbols, and redundant description thereof is omitted.

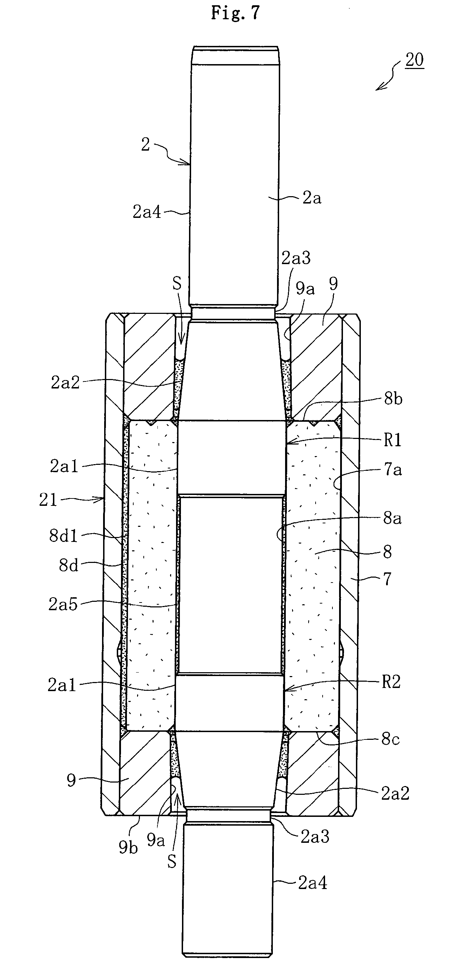

In the embodiment described above, the bearing member 11 is opened only on one side in the axial direction. However, the present invention is not limited thereto. For example, a fluid dynamic bearing device 20 illustrated in FIG. 7 comprises a bearing member 21 opened at both axial ends. In the example of the figure, annular sealing portions 9 are fixed to an upper end and a lower end of the inner peripheral surface 7a of the housing 7. The shaft member 2 is formed only of the shaft portion 2a, and the shaft side sealing surface 2a2 formed into a tapered shape that radially shrinks toward an open-to-air side is provided at a position of facing, in the radial direction, an inner peripheral surface (bearing side sealing surface 9a) of each of the upper and lower sealing portions 9. In this way, the sealing space S formed into a wedge shape in cross-section that is increased in radial dimension toward the open-to-air side is provided in each of the opening portions at both the ends of the bearing member 21.

Further, in the embodiment described above, the dynamic pressure generating grooves 8a1 in a herringbone pattern are described as the radial dynamic pressure generating portion formed on the radial bearing surface 2a1 of the shaft portion 2a. However, the present invention is not limited thereto. For example, the radial dynamic pressure generating portion may be formed of dynamic pressure generating grooves in a spiral pattern, axial grooves, or a multi-arc surface. Further, in the embodiment described above, the radial dynamic pressure generating portions are formed at two positions spaced apart from each other in the axial direction on the inner peripheral surface 8a of the bearing sleeve 8. However, the present invention is not limited thereto. The radial dynamic pressure generating portion may be formed only at one position, or the radial dynamic pressure generating portions at the two positions may be formed continuously with each other in the axial direction. Still further, in the embodiment described above, the radial dynamic pressure generating portion of the upper radial bearing surface A1 is formed into an axially asymmetrical shape so as to force downward the lubricating oil in the radial bearing gap. However, when the lubricating oil need not be forced in this way, the radial dynamic pressure generating portion of the upper radial bearing surface A1 may be formed into an axially symmetrical shape.

Yet further, in the embodiment described above, the dynamic pressure generating grooves in a spiral pattern are described as the thrust dynamic pressure generating portions provided to the flange portion 2b. However, the present invention is not limited thereto. For example, dynamic pressure generating grooves in a herringbone pattern may be employed.

Yet further, in the embodiment described above, the dynamic pressure generating portions are formed on the inner peripheral surface 8a of the bearing sleeve 8, the lower end surface 8c of the bearing sleeve 8, and the upper end surface 10a of the thrust bush 10. However, the dynamic pressure generating portions may be formed on the other side across the bearing gaps, in other words, formed on the outer peripheral surface (radial bearing surface 2a1) of the shaft portion 2a, the upper end surface 2b1 of the flange portion 2b, and the lower end surface 2b2 of the flange portion 2b. Alternatively, there may be formed what is called a cylindrical bearing by forming each of the inner peripheral surface 8a of the bearing sleeve 8 and the radial bearing surface 2a1 of the shaft portion 2a into a cylindrical surface shape.

Yet further, in the embodiment described above, the shaft member 2 is rotated, but the present invention is not limited thereto. There may be employed a shaft fixed type in which the shaft member 2 is fixed and the bearing member 11 is rotated. In this case, the rotor 3 (fans 3a) is mounted to the bearing member 11.

Yet further, in the embodiment described above, the fluid dynamic bearing device according to the present invention is incorporated in an axial-flow fan motor. However, the present invention is not limited thereto. For example, the fluid dynamic bearing device according to the present invention may be incorporated in a spindle motor for a disk drive such as an HDD, a polygon scanner motor for a laser beam printer, or a color-wheel motor for a projector.

### Reference Signs List

- 1: fluid dynamic bearing device
- 2: shaft member
- 2a: shaft portion
- 2a1: radial bearing surface
- 2a2: shaft side sealing surface
- 2b: flange portion
- 3: rotor
- 4: stator coil
- 5: magnet
- 6: casing
- 7: housing
- 8: bearing sleeve
- 9: sealing portion
- 9a: bearing side sealing surface
- 10: thrust bush
- 11: bearing member
- 20: fluid dynamic bearing device
- A1, A2: radial bearing surface
- R1, R2: radial bearing portion
- T1, T2: thrust bearing portion
- S: sealing space

## Claims

1. A fluid dynamic bearing device, comprising:
a shaft member;
a bearing member having an inner periphery into which the shaft member is inserted;
a lubricating oil filled in an inside of the bearing member;
a radial bearing portion for generating a dynamic pressure action in an oil film formed in a radial bearing gap between an outer peripheral surface of the shaft member and an inner peripheral surface of the bearing member so as to support the shaft member relatively in a radial direction; and
a sealing space that is formed between a shaft side sealing surface provided to the outer peripheral surface of the shaft member and a bearing side sealing surface provided to the inner peripheral surface of the bearing member, the sealing space being configured to retain an oil surface therein,
wherein the shaft side sealing surface and the bearing side sealing surface each comprise a tapered surface that radially shrinks toward an open-to-air side, and
wherein the bearing side sealing surface has a minimum diameter set to be larger than a maximum diameter of the shaft side sealing surface.

2. A fluid dynamic bearing device according to claim 1, wherein the shaft side sealing surface is inclined with respect to an axial direction at an inclination angle set to be higher than an inclination angle of the bearing side sealing surface with respect to the axial direction.

3. A fluid dynamic bearing device according to claim 1 or 2, wherein radially outer dimensions of all regions on the open-to-air side with respect to the shaft side sealing surface of the outer peripheral surface of the shaft member are each set to be equal to or smaller than a minimum diameter of the shaft side sealing surface.

4. A fluid dynamic bearing device according to any one of claims 1 to 3, wherein the bearing member has an oil repellent agent applied to an end surface which is provided on the open-to-air side with respect to the bearing side sealing surface.

5. A fluid dynamic bearing device according to any one of claims 1 to 4, wherein the outer peripheral surface of the shaft member has the oil repellent agent applied to a region which is adjacent on the open-to-air side with respect to the shaft side sealing surface.

6. A fluid dynamic bearing device according to any one of claims 1 to 5,
wherein the bearing member is opened at both ends in the axial direction, and
wherein the sealing space comprises sealing spaces provided respectively in opening portions at both the ends in the axial direction.
